# EUROPÄISCHE PATENTSCHRIFT

(11) **EP 4 147 260 B1**
(45) Veröffentlichungstag und Bekanntmachung des Hinweises auf die Patenterteilung: **15.10.2025**
(21) Anmeldenummer: 21735864.7
(22) Anmeldetag: 16.06.2021
(51) Int. Cl.: H01H 9/34, H01H 71/02, H02B 1/056, H02B 1/32, H02B 13/025

(54) **GERÄTETRÄGER FÜR MINDESTENS EINEN ELEKTRISCHEN SCHALTER**
CARRIER FOR AT LEAST ONE SWITCHING DEVICE
SUPPORT POUR AU MOINS UN APPAREIL DE COMMUTATION

(30) Priorität: 23.06.2020 DE 102020207774
(43) Veröffentlichungstag der Anmeldung: 15.03.2023
(73) Patentinhaber: Siemens Aktiengesellschaft, 80333 München (DE); Jean Müller GmbH Elektrotechnische Fabrik, 65343 Eltville (DE)
(72) Erfinder: PLECHINGER, Ekkehard, 92361 Röckersbühl (DE); RINGEL, Walter, 65399 Kiedrich (DE); BLEUEL, Harald, 65375 Oestrich-Winkel (DE); MADER, Jürgen, 65375 Oestrich-Winkel (DE); WEBER, Christoph, 84061 Ergoldsbach (DE); MALICH, Timo, 92245 Kümmersbruck (DE); SCHULDA, Thomas, 91077 Hetzles (DE)
(74) Vertreter: Siemens Patent Attorneys
(86) Internationale Anmeldenummer: PCT/EP2021/066229
(87) Internationale Veröffentlichungsnummer: WO 2021/259728

(56) Entgegenhaltungen:
- EP-B1- 2 641 255
- EP-B1- 2 871 655
- CA-A1- 2 473 272
- DE-U1- 20 212 065
- FR-A1- 2 704 352
- KR-B1- 101 229 290
- US-A- 4 825 336

## Beschreibung

Die Erfindung betrifft einen Geräteträger für mindestens einen elektrischen Schalter.

Derzeit werden Lasttrennschalter mit Sicherungen eingesetzt, die den Vorteil haben, dass viele Stromkreise auf kleinem Bauraum einer Schaltgerätekombination eingebaut werden können. Dies ist beispielsweise bei der Jean Müller SASIL-Leiste verwirklicht.

Es ist wünschenswert, dass auch Leistungsschalter in diese bauraumsparenden Schaltgerätekombinationen eingebaut werden können. Bei der Montage von Leistungsschaltern auf derart engen Bauraum ist es jedoch technisch herausfordernd, Überschläge bei Kurzschlussabschaltungen zu beherrschen.

Um Überschläge zu vermeiden, werden typischerweise Isolationsabstände in konventionellen Verteileraufbauten durch relativ große Phasentrennwände und/oder Klemmabdeckungen realisiert. In dem beengten Bauraum von Schaltfeldern sind diese Maßnahmen aus Platzgründen nicht möglich beziehungsweise nur schwer zu realisieren.

Die DE 202 12 065 U1 offenbart einen selektiven HauptLeitungsschutzschalter mit nebeneinander angereiht auf einem 3-poligen Adapter, der ausgerüstet ist mit Mitteln zur mechanischen Befestigung am Sammelschienensystem, Abweiser zur sicheren Ableitung von Schaltgasen sowie mit Verbindungsschienen zur elektrischen Kontaktierung der jeweiligen Phasen-Sammelschiene eines Sammelschienensystems mit dem zugeordneten selektiven Hauptleitungsschutzschalter.

In EP2871655 B1 ist ein weiterer Leistungsschalter-Träger dargestellt, der auf beiden Seiten eine Abgasvorrichtung zur Evakuierung von Schaltgasen enthält.

Die Stromverteilungsplatine der US 4 825 336 A umfasst eine Blindabdeckung sowie Haupt- und Nebenschlussunterbrecher. Eine Jalousieabdeckung hat eine an einem Ende angeordnete Eingriffslasche zum Eingriff an einer Kante des Fensters und eine faltbare Eingriffslasche am anderen Ende des Hauptkörpers der Jalousieabdeckung. Die faltbare Lasche hält in Zusammenarbeit mit der Eingriffslasche die Blindabdeckung an der Verteilertafelabdeckung. Die Nebenschluss-Leistungsschalter sind Seite an Seite montiert, wobei eine isolierende Trennwand dazwischen angeordnet ist.

In der EP 2 641 255 A1 wird eine Leistungsschalterbaugruppe offenbart, die ein Gehäuse umfasst, einen Auslösemechanismus, einen Entlüftungskanal und eine Kammer. Der im Gehäuse positionierte Auslösemechanismus kann bewirken, dass sich ein beweglicher Kontakt von einem zweiten Kontakt trennt, wenn die Schutzschalterbaugruppe einen elektrischen Fehler erkennt. Der Entlüftungskanal ist im Gehäuse ausgebildet und so positioniert, dass Gas und Schmutz, der entsteht, wenn sich der bewegliche Kontakt während des elektrischen Fehlers vom zweiten Kontakt trennt, in eine Öffnung im Gehäuse abgeführt werden. Die Kammer verfügt über ein Kammergehäuse, das mit dem Gehäuse neben der Öffnung verbunden ist, so dass die Kammer das aus der Öffnung austretende Gas und den Schmutz aufnimmt.

FR27043S2 A1 und KR101229290 B1 zeigen weitere Beispiele für Geräteträger mit Schaltgasleitvorrichtungen. CA2473272 A1 offenbart ein Gasabsaugelement für die kontrollierte Ableitung von Schaltgasen aus Leistungsschaltern.

Es ist daher Aufgabe der vorliegenden Erfindung, eine alternative Lösung mittels eines Geräteträgers zur Verfügung zu stellen, welcher auch in einem beengten Schaltfeld die geforderten Isolationsabstände zum Schutz vor Überschlägen ermöglicht.

Die erfindungsgemäße Aufgabe wird durch den Geräteträger gemäß Patentanspruch 1 gelöst. Vorteilhafte Ausgestaltungen des erfindungsgemäßen Geräteträgers sind in den Unteransprüchen angegeben.

Der Geräteträger für mindestens einen elektrischen Schalter gemäß Anspruch 1 ist so ausgestaltet, dass der mindestens eine elektrische Schalter Auslässe von Schaltgasen an seiner Abgangsseite und an seiner Eingangsseite aufweist, wobei die Schaltgase eines im Geräteträger montierten elektrischen Schalters von der Abgangsseite und der Eingangsseite jeweils zur Unterseite des Geräteträgers geführt werden und von dort den Geräteträger verlassen können.

Vorteilhaft beim erfindungsgemäßen Geräteträger ist, dass im engen Einbauraum eines Schaltfeldes anstatt eines Lasttrennschalters mit Sicherung Leistungsschalter mit hohem Abschaltvermögen eingesetzt werden können.

In einer Ausgestaltung ist der mindestens eine elektrische Schalter von der Vorderseite des Geräteträgers montierbar.

In einer Ausgestaltung des erfindungsgemäßen Geräteträgers werden die Schaltgase der Abgangsseite an der Unterseite des Geräteträgers mit den Schaltgasen der Eingangsseite des mindestens einen elektrischen Schalters vor dem Verlassen zusammengeführt.

In einer weiteren Ausgestaltung erfolgt die Führung der Schaltgase bei einem mehrpoligen elektrischen Schalter bis zur Unterseite des Geräteträgers getrennt nach den jeweiligen Polen.

Erfindungsgemäß werden die Schaltgase der Abgangsseite und der Eingangsseite des mindestens einen elektrischen Schalters zuerst im Wesentlichen senkrecht in Richtung der Unterseite des Geräteträgers geführt und dann unterhalb des mindestens einen elektrischen Schalters aufeinander zugeführt.

In einer weiteren Ausgestaltung sind an der Eingangsseite des elektrischen Schalters Stromschienen und an der Abgangsseite ebenfalls Stromschienen angeordnet und die Schaltgase werden um die Stromschienen geführt. An den Stromschienen an der Eingangsseite des elektrischen Schalters können jeweils Klemmen zur Kontaktierung von Stromschienen einer Einspeisung angeordnet sein.

In einer Ausgestaltung umfasst der Geräteträger an der Unterseite einen Filterkasten, durch den die Schaltgase den Geräteträger verlassen.

Vorteilhaft dabei ist, dass nach einem Kurzschluss des in dem Geräteträger integrierten elektrischen Schalters, beispielsweise eines Leistungsschalters, die Ruß- und Kontaktabbrand-Partikel aus den Schaltgasen herausgefiltert werden und dadurch der Schaltschrank nicht verschmutzt wird und deshalb auch nicht gereinigt werden muss. Es ist eine Reinigung der Schaltgase zu einem hohen Prozentsatz, beispielsweise >90%, möglich. Ebenso ermöglicht der Filterkasten eine kompakte Bauform.

In einer Ausgestaltung weist der Filterkasten eine Lochanordnung auf, ist der Filterkasten mit einem Filtermedium gefüllt und/oder weist der Filterkasten ein Labyrinth auf.

In einer weiteren Ausgestaltung werden die Schaltgase in Kanälen geführt.

In einer Ausgestaltung des erfindungsgemäßen Geräteträgers umfasst dieser ein Gehäuse.

In einer Ausgestaltung des erfindungsgemäßen Geräteträgers ist der mindestens eine elektrische Schalter von der Vorderseite des Geräteträgers montierbar.

In einer Ausgestaltung wird der elektrische Schalter von der Vorderseite in den Geräteträger eingeführt und/oder sind Befestigungs- und Kontaktschrauben ebenfalls von der Vorderseite zugänglich.

Vorteilhaft hierbei ist, dass die Montage des Geräteträgers und die Montage des elektrischen Schalters in den Geräteträger örtlich und zeitlich voneinander unabhängig erfolgen können.

In einer weiteren Ausgestaltung sind zwei elektrische Schalter von der Vorderseite des Geräteträgers montierbar im Geräteträger.

Vorteilhaft hierbei ist, dass im Schaltschrank elektrische Schalter im Geräteträger und eine typische Sicherung bei Lasttrennschaltern mit Sicherungen den gleichen Platzbedarf aufweisen.

In einer weiteren Ausgestaltung sind die zwei elektrischen Schalter hintereinander von der Vorderseite des Geräteträgers montierbar.

In einer weiteren Ausgestaltung des erfindungsgemäßen Geräteträgers ist der mindestens eine elektrische Schalter ein Leistungsschalter, ein Lastschalter, ein Lasttrennschalter, ein Schütz oder ein Hybridschalter.

Die oben beschriebenen Eigenschaften, Merkmale und Vorteile dieser Erfindung sowie die Art und Weise, wie sie erreicht werden, werden klarer und deutlicher verständlich im Zusammenhang mit der folgenden Beschreibung der Ausführungsbeispiele, die im Zusammenhang mit den Figuren näher erläutert werden.

Dabei zeigen:
- Figur 1A und 1B:: erfindungsgemäßer Geräteträger;
- Figur 2:: erfindungsgemäßer Geräteträger mit Stromschienen und Klemmen;
- Figur 3:: seitliche Darstellung des erfindungsgemäßen Geräteträgers;
- Figur 4:: weitere seitliche Darstellung des erfindungsgemäßen Geräteträgers;
- Figur 5A und 5B:: Aufsicht und Untersicht auf den erfindungsgemäßen Geräteträger;
- Figur 6:: erfindungsgemäßer Geräteträger;
- Figur 7:: erfindungsgemäßer Geräteträger mit Einspeisung und Stromschienen;
- Figur 8A und 8B:: erfindungsgemäßer Geräteträger mit Filterkasten und Filterkasten;
- Figur 9:: erfindungsgemäßer Geräteträger mit Filterkasten und Lochanordnung;
- Figur 10:: erfindungsgemäßer Geräteträger mit Filterkasten und Filtermedium;
- Figur 11:: erfindungsgemäßer Geräteträger mit Filterkasten und Labyrinth;
- Figur 12:: erfindungsgemäßer Geräteträger zur Montage eines elektrischen Schalters von der Vorderseite;
- Figur 13:: erfindungsgemäßer Geräteträger und elektrischer Schalter vor der Montage von der Vorderseite des Geräteträgers;
- Figur 14:: erfindungsgemäßer Geräteträger nach Montage des elektrischen Schalters von der Vorderseite des Geräteträgers;
- Figur 15:: erfindungsgemäßer Geräteträger mit montiertem elektrischem Schalter;
- Figur 16:: erfindungsgemäßer Geräteträger und zwei montierte elektrische Schalter;
- Figur 17:: erfindungsgemäßer Geräteträger ohne montierte elektrische Schalter;
- Figur 18:: erfindungsgemäßer Geräteträger und zwei elektrische Schalter vor Montage;
- Figur 19A und 19B:: Unterseite des erfindungsgemäßen Geräteträgers mit zwei montierten elektrischen Schaltern;
- Figur 20:: erfindungsgemäßer Geräteträger mit zwei montierten elektrischen Schaltern und Filterkasten; und
- Figur 21:: erfindungsgemäßer Geräteträger mit zwei montierten Schaltern und Filterkasten.

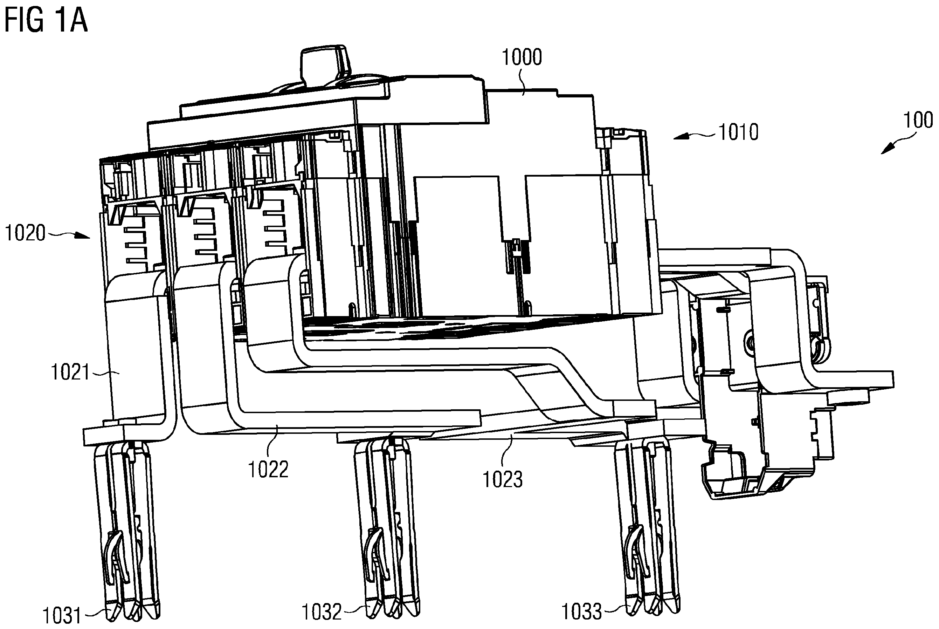

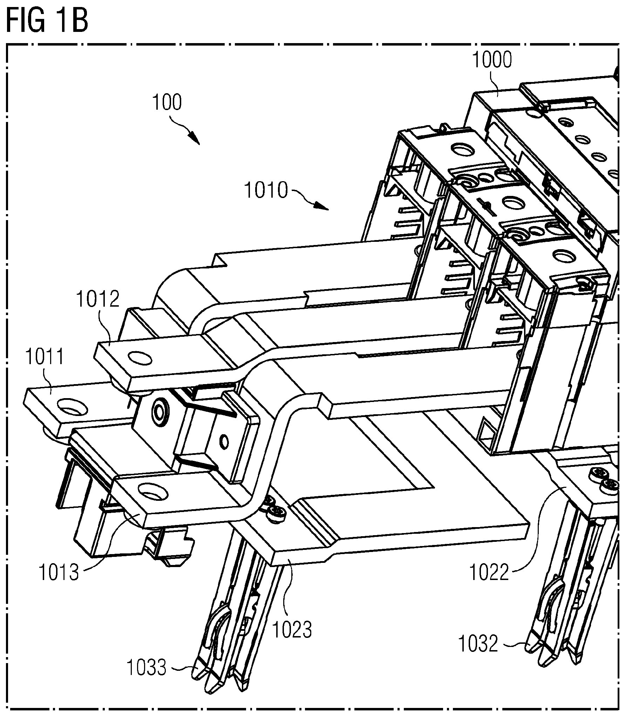

In den Figuren 1A und 1B ist ein erfindungsgemäßer Geräteträger 100 für mindestens einen elektrischen Schalter 1000 dargestellt. Der mindestens eine elektrische Schalter 1000 weist Auslässe von Schaltgasen an seiner Abgangsseite 1010 und an seiner Eingangsseite 1020 auf und ist von der Vorderseite 110 des Geräteträgers 100 montierbar im Geräteträger 100.

Die Schaltgase eines im Geräteträger 100 montierten elektrischen Schalters 1000 werden von der Abgangsseite 1010 und der Eingangsseite 1020 des elektrischen Schalters 1000 jeweils zur Unterseite 120 des Geräteträgers 100 geführt und können von dort den Geräteträger 100 verlassen.

Im erfindungsgemäßen Geräteträger 100 sind an der Eingangsseite 1020 des elektrischen Schalters 1000 Stromschienen 1021; 1022; 1023 und an der Abgangsseite 1010 ebenfalls Stromschienen 1011; 1012; 1013 angeordnet und die Schaltgase werden um diese Stromschienen 1021; 1022; 1023, 1011; 1012; 1013 geführt.

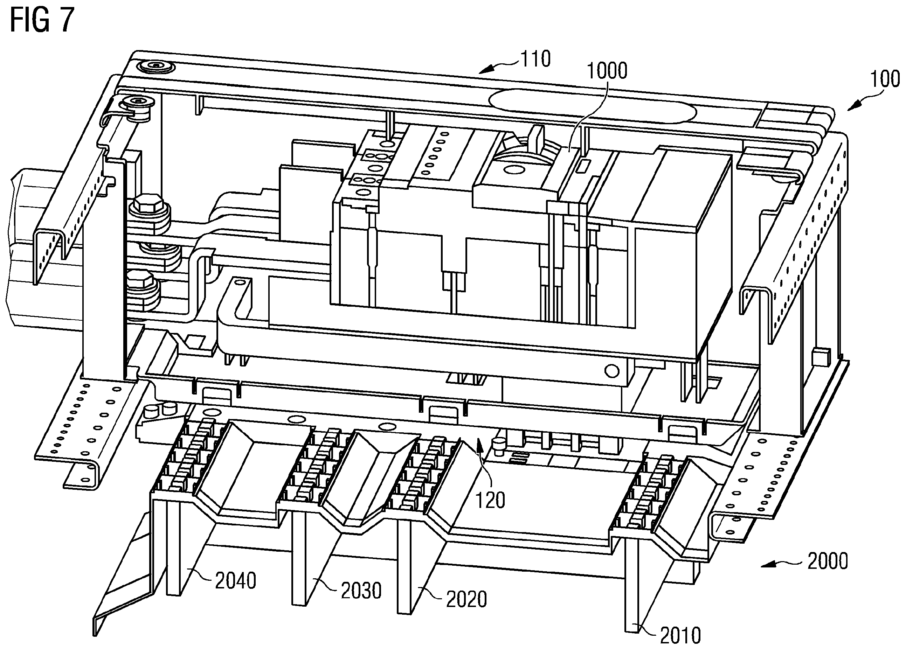

An den Stromschienen 1021; 1022; 1023 an der Eingangsseite 1020 des elektrischen Schalters 1000 können jeweils Klemmen 1031; 1032; 1033 zur Kontaktierung von Stromschienen 2010; 2020; 2030; 2040 einer Einspeisung 2000 angeordnet sein, wie dies beispielsweise in Figur 7 dargestellt ist.

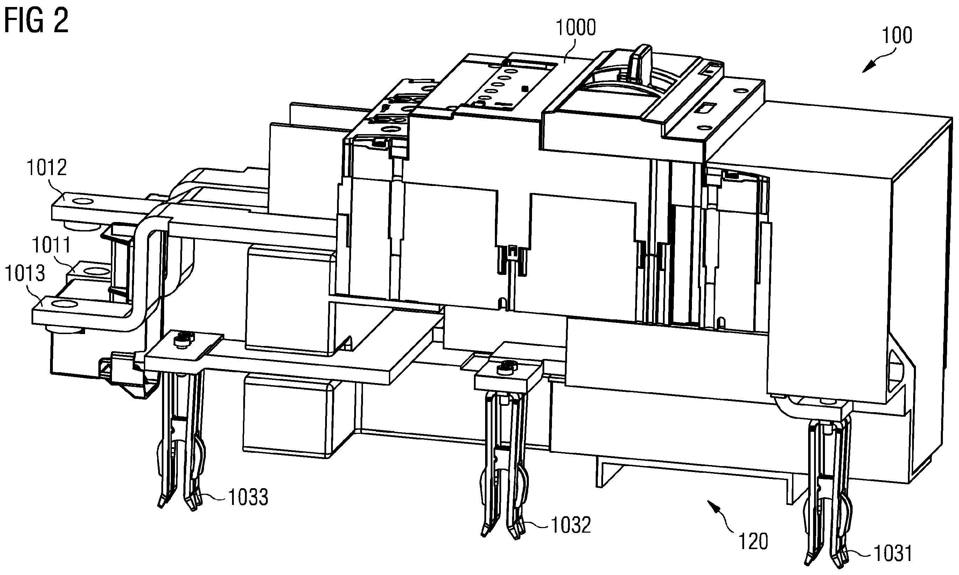

In Figur 2 ist der erfindungsgemäße Geräteträger 100 dargestellt mit montiertem elektrischem Schalter 1000. Die Schaltgase des elektrischen Schalters 1000 werden von der Abgangsseite 1010 und der Eingangsseite 1020 jeweils zur Unterseite 120 des Geräteträgers 100 geführt und können von dort den Geräteträger 100 verlassen. Die Schaltgase der Abgangsseite 1010 und der Eingangsseite 1020 des elektrischen Schalters 1000 werden zuerst im Wesentlichen senkrecht zur Unterseite 120 des Geräteträgers 100 geführt und dann unterhalb des elektrischen Schalters 1000 aufeinander zugeführt.

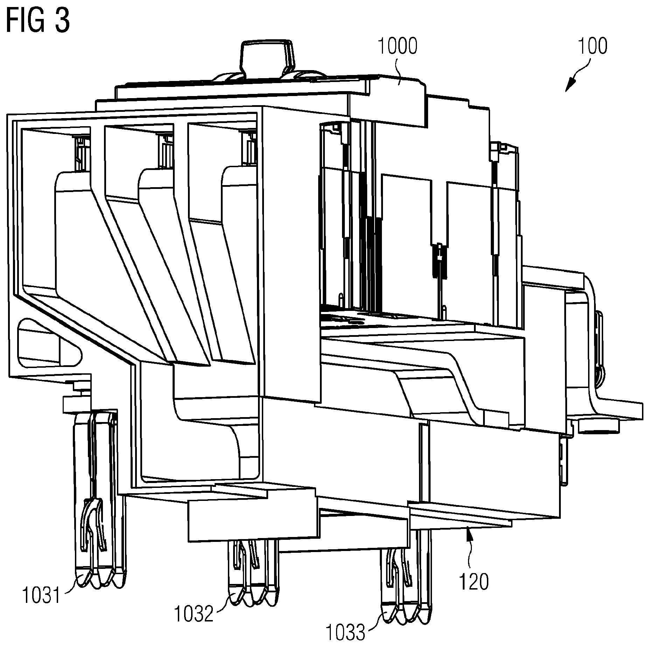

In Figur 3 ist der erfindungsgemäße Geräteträger 100 mit montiertem elektrischem Schalter 1000 aus einer seitlichen Perspektive dargestellt. Es ist dabei erkennbar, dass die Führung der Schaltgase bei einem mehrpoligem elektrischen Schalter 1000 bis zur Seite/Unterseite 120 des Geräteträgers 100 getrennt nach den jeweiligen Polen erfolgt.

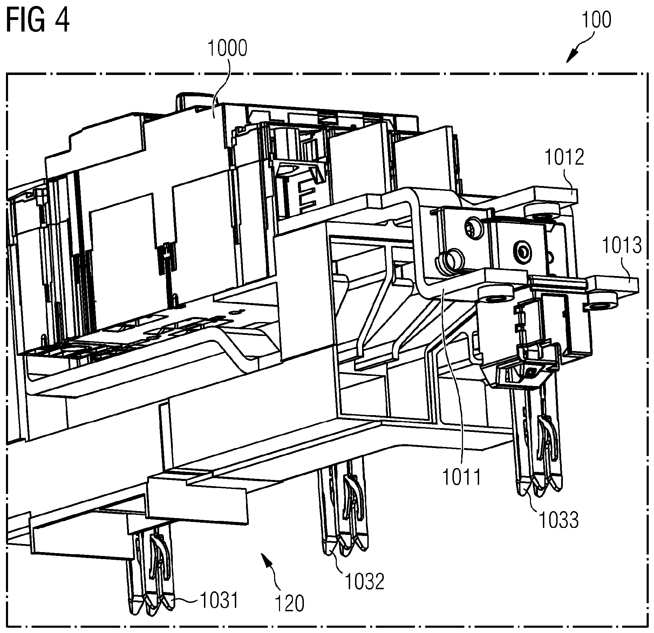

In Figur 4 ist der erfindungsgemäße Geräteträger 100 mit montiertem elektrischem Schalter 1000 in einer weiteren perspektivischen Darstellung von Seiten der Abgangsseite 1010 skizziert. Dabei umfasst der Geräteträger 100 Stromschienen 1011; 1012; 1013 an der Abgangsseite 1010.

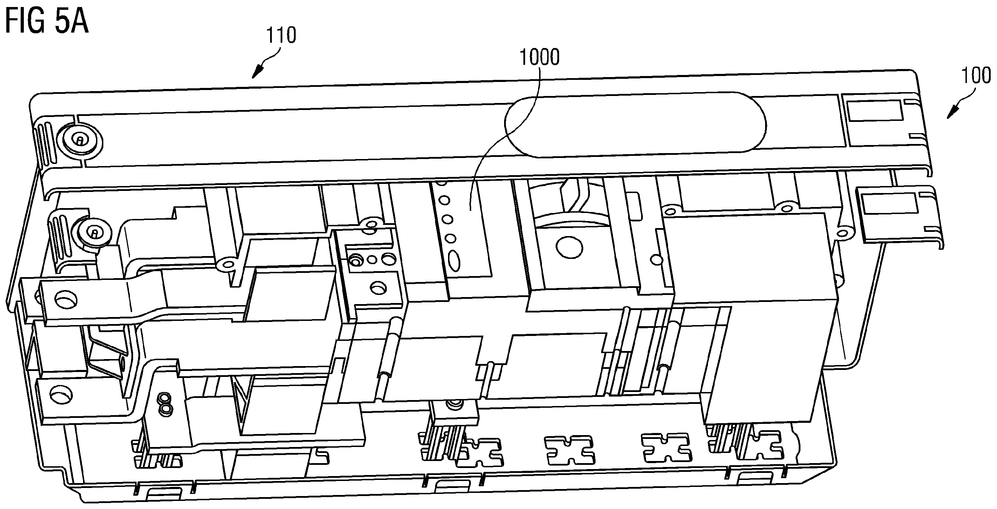

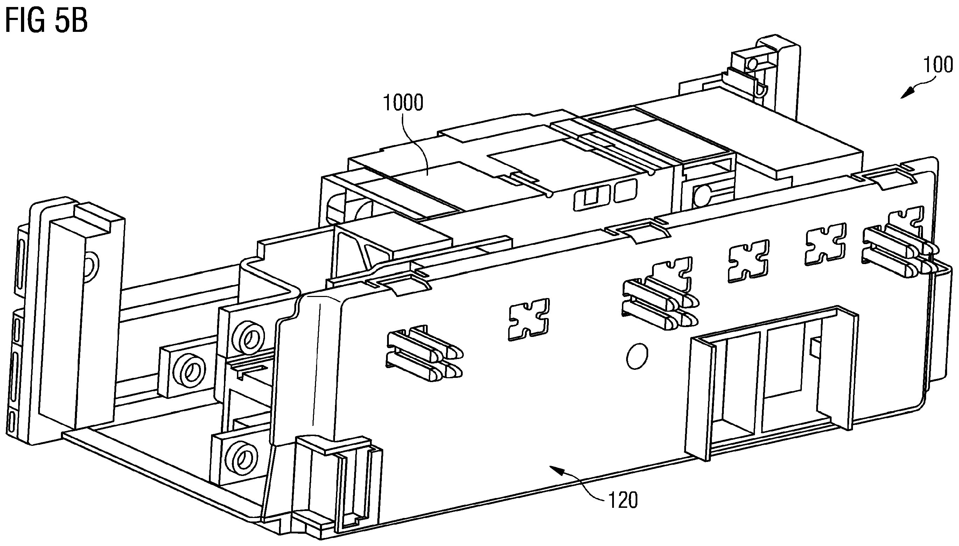

In den Figuren 5A und 5B ist der erfindungsgemäße Geräteträger 100 von der Vorderseite 110 beziehungsweise von der Unterseite 120 dargestellt. Dabei ist im erfindungsgemäßen Geräteträger 100 ein elektrischer Schalter 1000 montiert. Der erfindungsgemäße Geräteträger 100 umfasst ein Gehäuse 180 an der Vorderseite 110 beziehungsweise ein Gehäuse 181 an der Unterseite 120. Der erfindungsgemäße Geräteträger 100 kann komplett von einem geschlossenen Gehäuse umgeben sein.

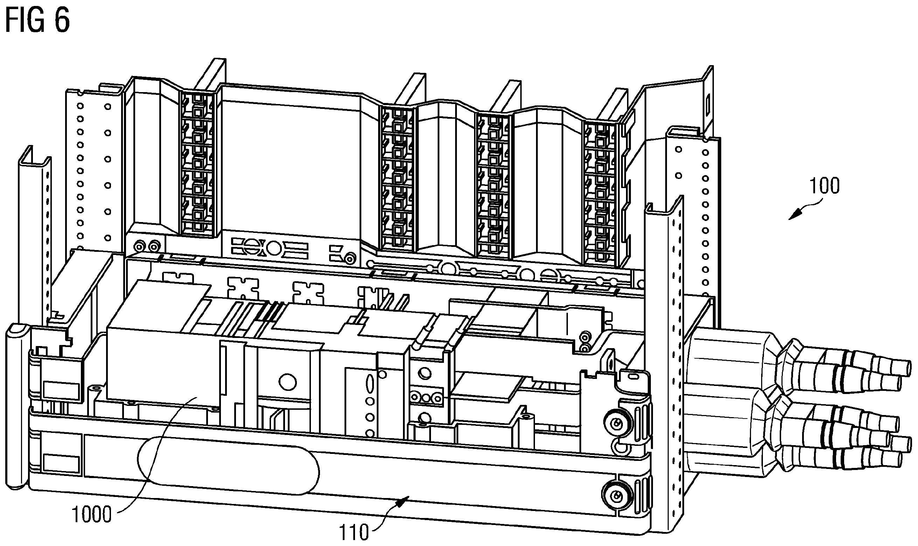

In Figur 6 ist der erfindungsgemäße Geräteträger 100 in einer seitlichen Positionierung dargestellt, wobei im Geräteträger 100 ein elektrischer Schalter 1000 montiert ist.

In Figur 7 ist der erfindungsgemäße Geräteträger 100 mit montiertem elektrischem Schalter 1000 dargestellt, wobei des Weiteren auch eine Einspeisung 2000 mit Stromschienen 2010; 2020; 2030; 2040 dargestellt ist. Der Geräteträger 100 ist auf diese Stromschienen 2010; 2020; 2030; 2040 mittels der Klemmen 1031; 1032; 1033 an der Eingangsseite 1020 des elektrischen Schalters 1000 aufgesteckt.

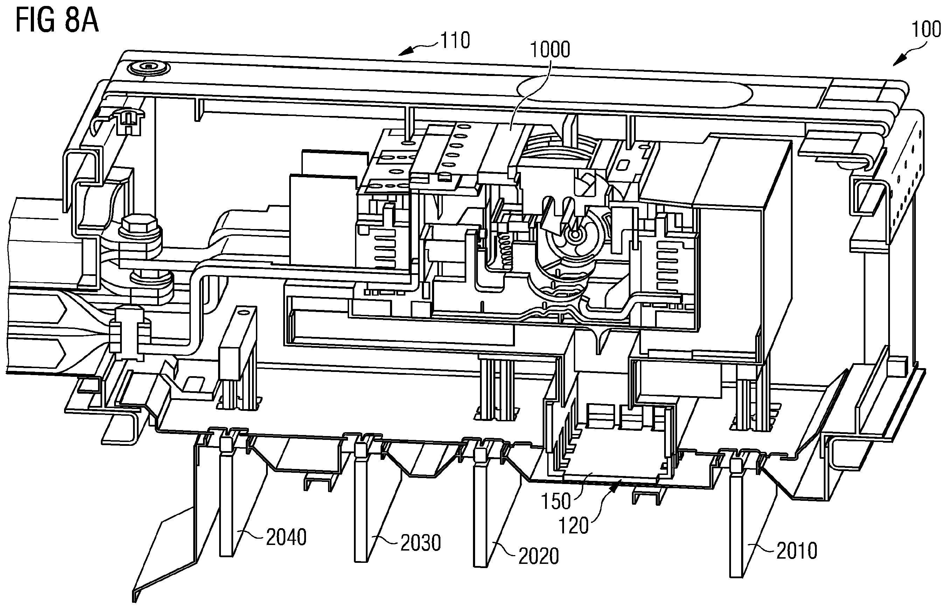

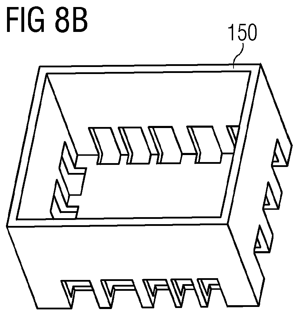

In Figur 8A ist der erfindungsgemäße Geräteträger 100 wiederum montiert an der Einspeisung 2000 dargestellt. Figur 8B stellt einen an der Unterseite 120 am Auslass des Geräteträgers 100 positionierten Filterkasten 150 dar. Durch diesen Filterkasten 150 verlassen die Schaltgase den Geräteträger 100.

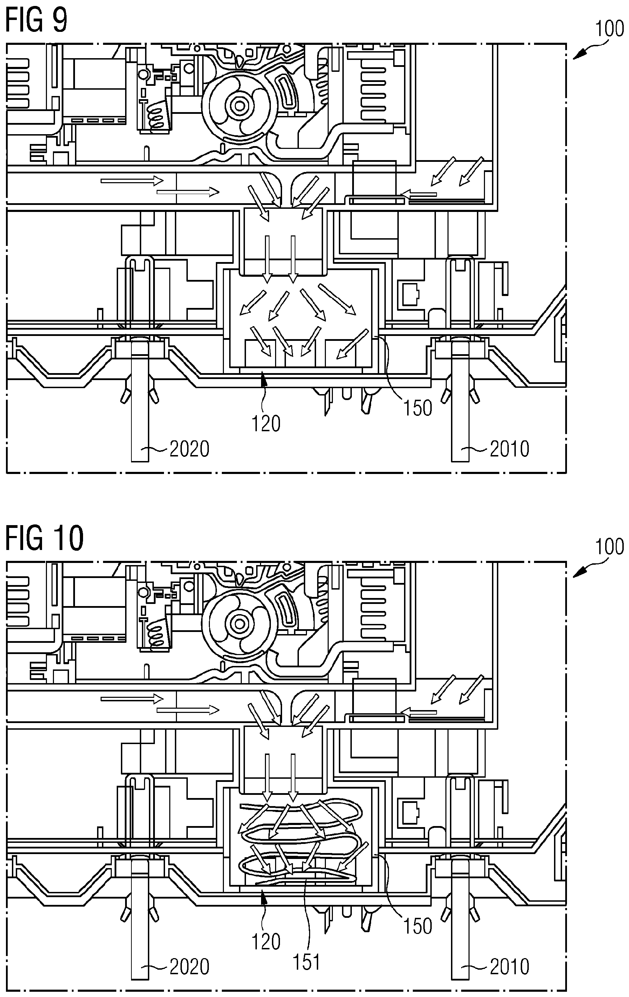

Figur 9 zeigt den erfindungsgemäßen Geräteträger 100 mit dem Filterkasten 150, wobei dieser Filterkasten 150 eine Lochanordnung aufweist. Mittels Pfeile sind die Strömungsverhältnisse der Schaltgase dargestellt, die Ströme der Schaltgase von der Eingangsseite 1020 und Abgangsseite 1010 vereinigen sich an der Unterseite 120 des Geräteträgers 100 und können durch den Filterkasten 150 den Geräteträger 100 verlassen. Aufgrund der Wechselwirkung der Schaltgase mit dem Filterkasten 150, beziehungsweise seiner Lochanordnung, können sich Partikel innerhalb des Filterkastens 150 absetzen und werden somit daran gehindert, aus dem Geräteträger 100 ausgestoßen zu werden.

In Figur 10 ist eine alternative Ausführungsform dargestellt, bei der im Filterkasten 150 ein Filtermedium 151 angeordnet ist. Dieses Filtermedium 151 bewirkt ein Abscheiden von festen Partikeln, die von den Schaltgasen transportiert werden. Es wird sichergestellt, dass diese Partikel nicht den erfindungsgemäßen Geräteträger 100 verlassen.

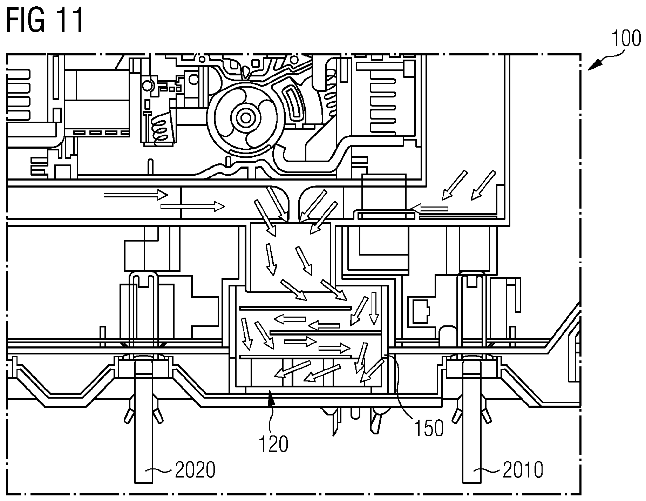

Figur 11 zeigt eine weitere alternative Ausführungsform, bei der der Filterkasten 150 ein Labyrinth aufweist. Dadurch werden die Schaltgase innerhalb des Filterkastens 150 in dem Labyrinth geführt und somit der Weg der Schaltgase bis zum Auslass aus dem erfindungsgemäßen Geräteträger 100 vergrößert.

Auch hiermit ergibt sich eine Filterwirkung für Partikel, die mit den Schaltgasen zusammen transportiert werden, und es wird verhindert, dass diese Partikel den Geräteträger 100 verlassen.

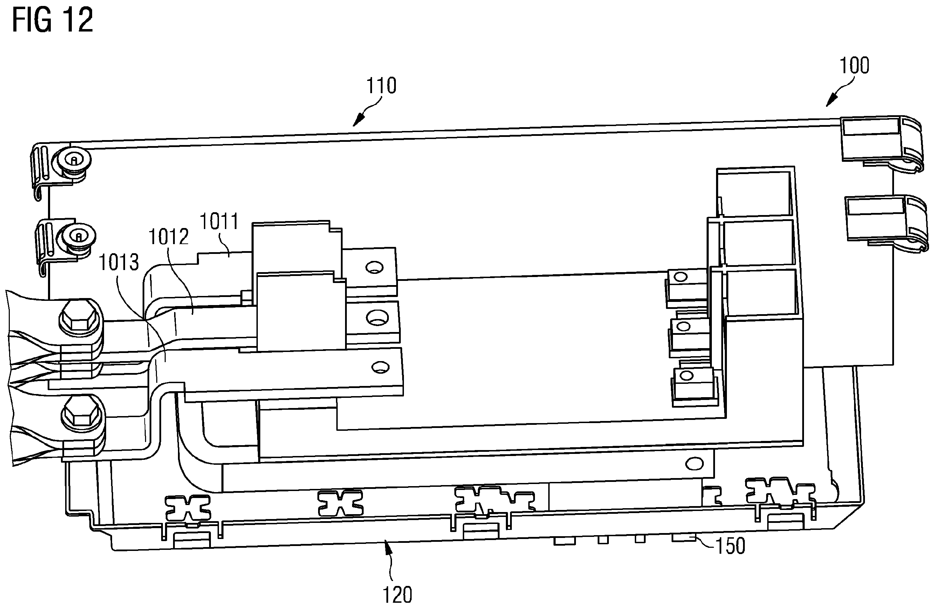

Figur 12 zeigt den erfindungsgemäßen Geräteträger 100, wobei der elektrische Schalter 1000 von der Vorderseite 110 des Geräteträgers 100 montierbar ist. In der Darstellung der Figur 12 ist nur der Geräteträger 100 ohne den elektrischen Schalter 1000 dargestellt.

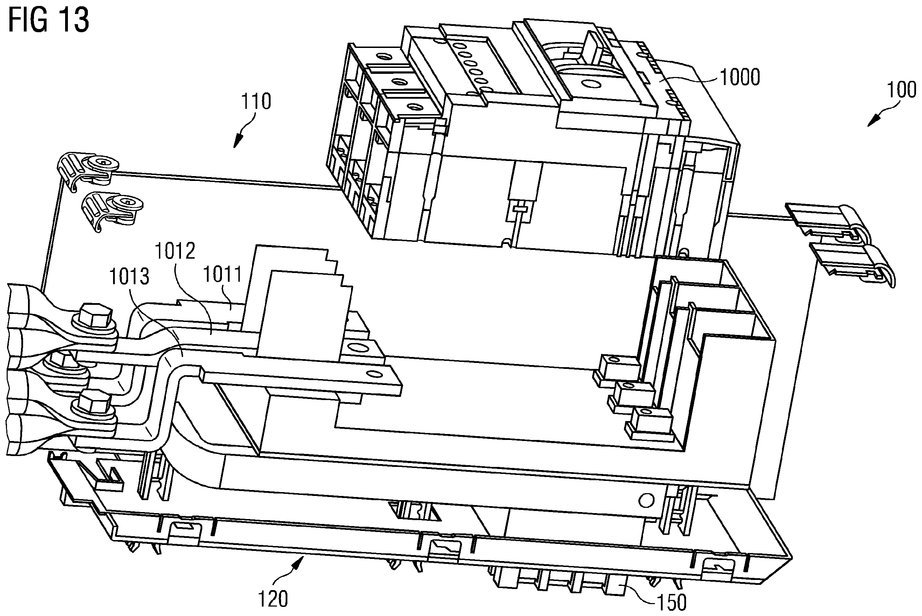

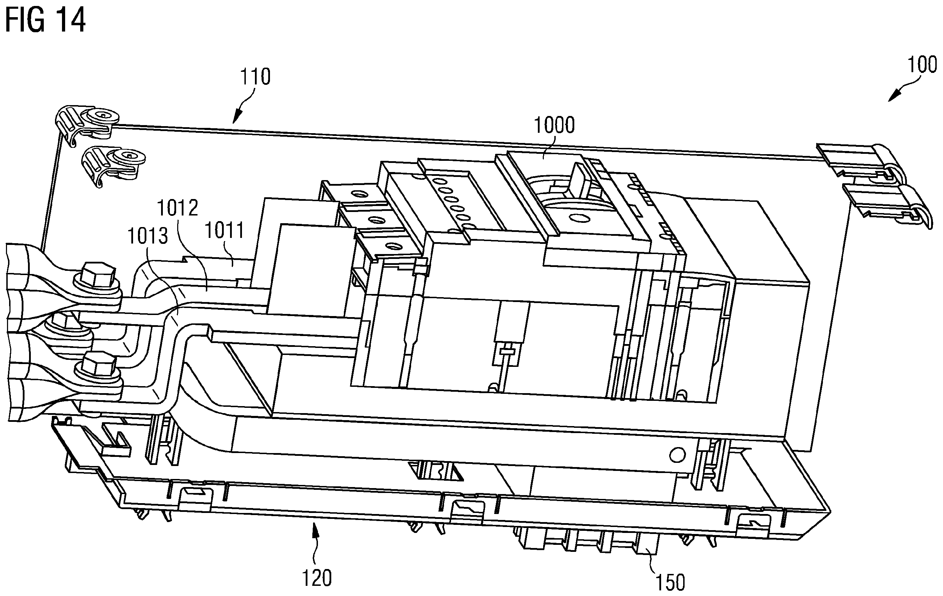

Figur 13 zeigt den erfindungsgemäßen Geräteträger 100 und einen elektrischen Schalter 1000 kurz vor Montage, wobei der elektrische Schalter 1000 von der Vorderseite 110 des Geräteträgers 100 montiert wird. Dabei wird der elektrische Schalter 1000 von der Vorderseite 110 in den Geräteträger 100 eingeführt. Nachdem der elektrische Schalter 1000 eingeführt wurde, ist er im erfindungsgemäßen Geräteträger 100 platziert, wie dies in Figur 14 dargestellt ist. Des Weiteren können Befestigungs- und Kontaktschrauben vorgesehen sein, die ebenfalls von der Vorderseite 110 zugänglich sind und ebenfalls von der Vorderseite 110 des Geräteträgers 100 eingeführt werden zur Befestigung und zur Kontaktierung des elektrischen Schalters 1000.

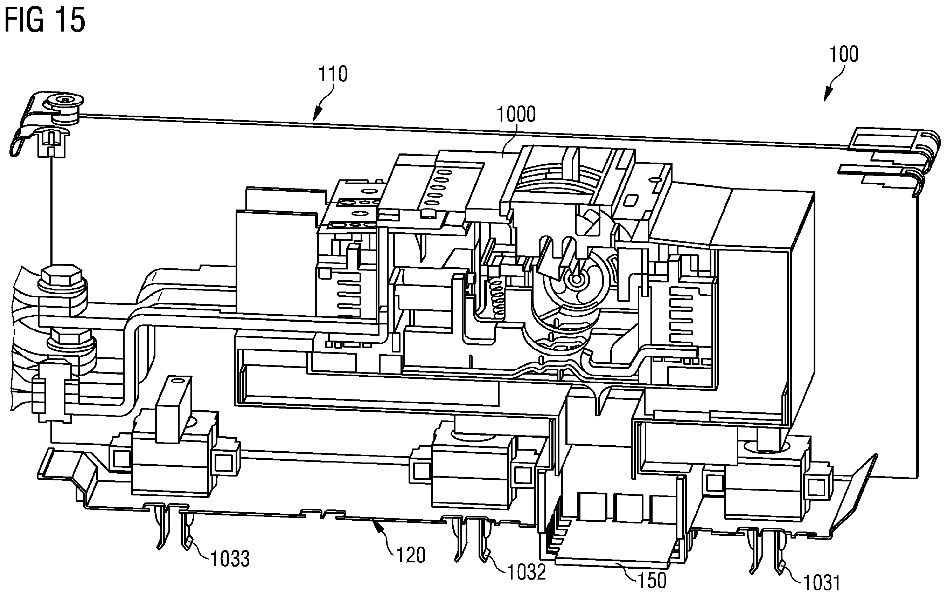

Figur 15 zeigt nochmals den erfindungsgemäßen Geräteträger 100 mit montiertem elektrischem Schalter 1000 und dem Filterkasten 150.

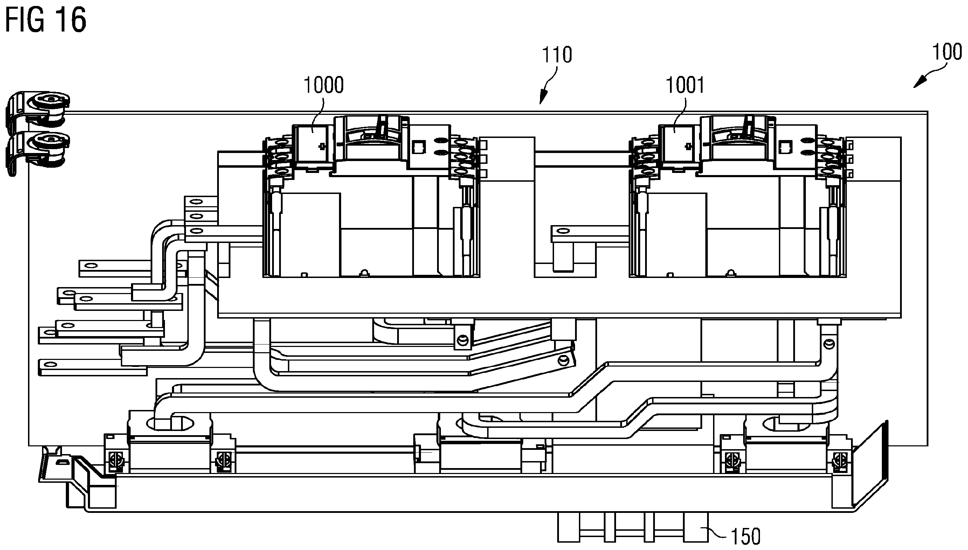

Es kann vorgesehen sein, dass im erfindungsgemäßen Geräteträger 100 zwei elektrische 1000; 1001 montierbar sind. Dies ist in den Figuren 16 bis 21 näher erläutert.

Figur 16 zeigt den erfindungsgemäßen Geräteträger 100 mit einem ersten elektrischen Schalter 1000 und einem zweiten Schalter 1001 montiert. Dabei sind die zwei elektrischen Schalter 1000; 1001 hintereinander von der Vorderseite 110 des Geräteträgers 100 montiert.

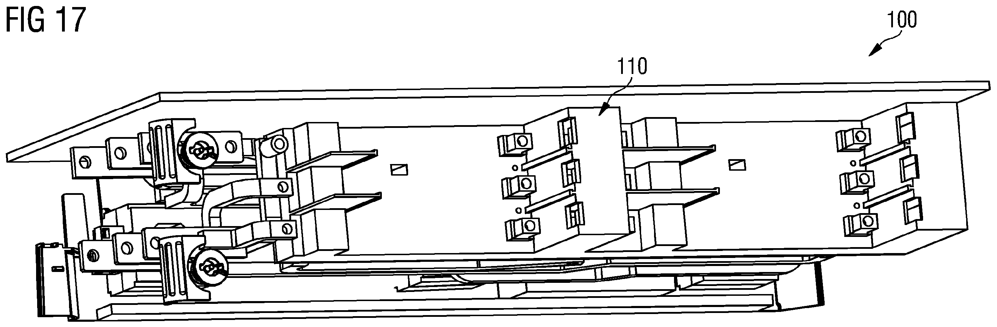

In Figur 17 ist der erfindungsgemäße Geräteträger 100 ohne die beiden elektrischen Schalter 1000; 1001 dargestellt, wobei diese hintereinander montierbar sind.

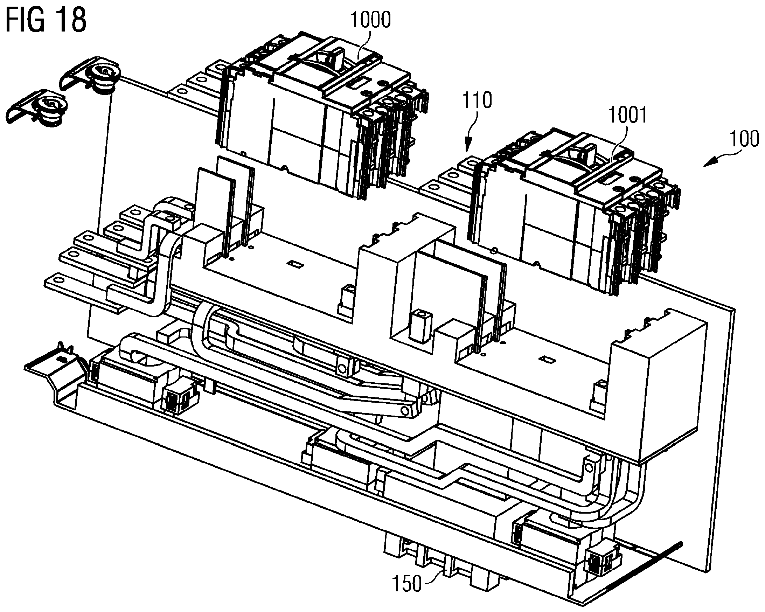

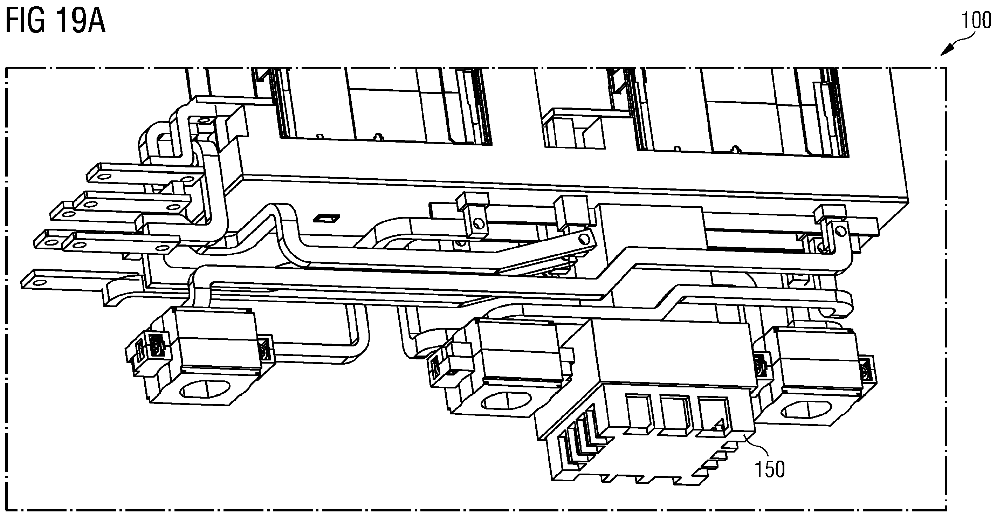

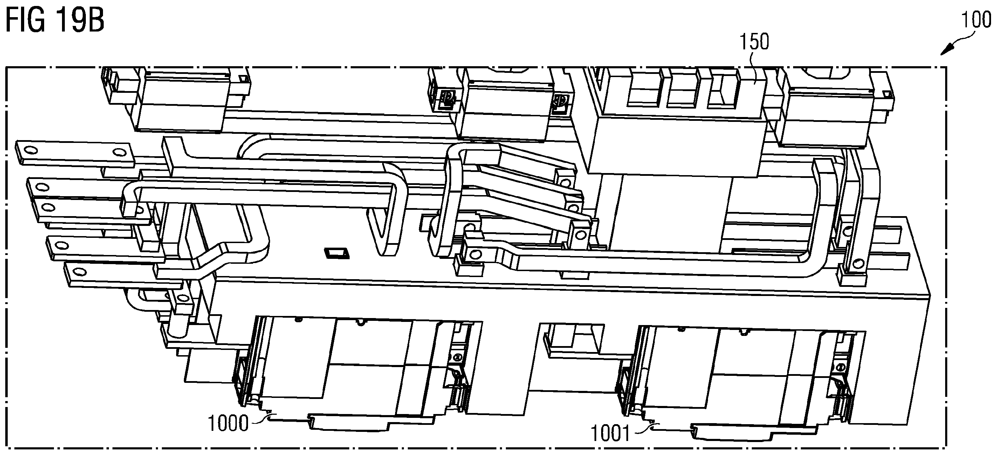

Figur 18 zeigt den Geräteträger 100 und die zwei elektrischen Schalter 1000; 1001, wie sie von der Vorderseite 110 des Geräteträgers 100 montiert werden, kurz bevor diese die Endposition im Geräteträger 100 erreichen. Die montierten zwei elektrischen Schalter 1000; 1001 im Geräteträger 100 sind in den Figuren 19A und 19B dargestellt, jeweils aus einer anderen Perspektive. In Figur 19A ist beispielsweise der Filterkasten 150 an der Unterseite 120 des Geräteträgers 100 dargestellt. Ebenso ist in Figur 19B der Filterkasten 150 dargestellt, wobei der Geräteträger 100 in dieser Darstellung auf den Kopf steht.

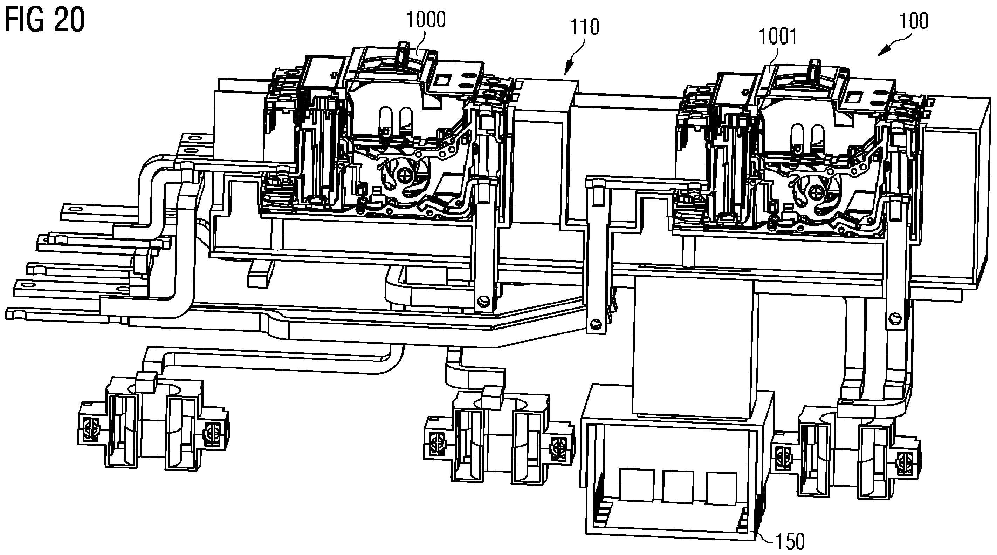

In Figur 20 ist der erfindungsgemäße Geräteträger 100 mit montiertem elektrischem Schaltern 1000; 1001 dargestellt, sowie dem Filterkasten 150.

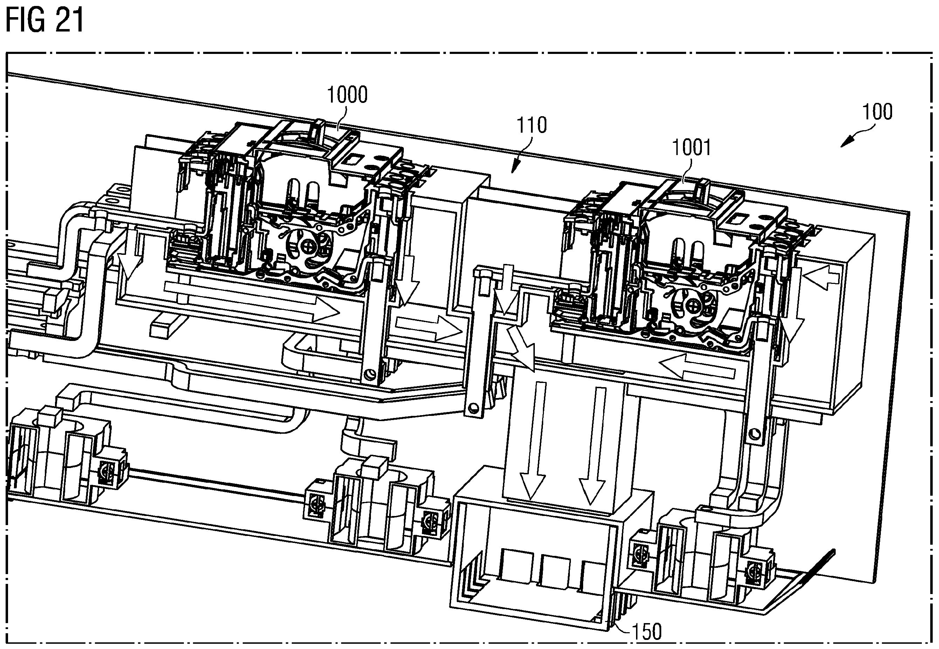

In Figur 21 sind die Ströme der Schaltgase von den Abgangsseiten 1010 und Eingangsseiten 1020 an der Unterseite 120 des Geräteträgers 100, die Vereinigung dieser Ströme der Schaltgase und das Einleiten in den Filterkasten 150 dargestellt. Die Ströme der Schaltgase sind wiederum mit Pfeilen dargestellt.

Der erfindungsgemäße Geräteträger 100 kann so ausgestaltet sein, dass die Schaltgase in Kanälen geführt werden. Des Weiteren kann vorgesehen sein, dass der erfindungsgemäße Geräteträger 100 ein Gehäuse 180; 181 umfasst. Der mindestens eine elektrische Schalter 1000; 1001 kann beispielsweise ein Leistungsschalter sein.

Der erfindungsgemäße Geräteträger 100 ermöglicht es, dass die aus dem elektrischen Schalter 1000 austretenden Schaltgase abgefangen werden. Ein phasengetrenntes Kanalisieren der Schaltgase ist durch den erfindungsgemäßen Geräteträger 100 möglich. Die Schaltgase werden auf die Rückseite beziehungsweise Unterseite 120 des Geräteträgers 100 geleitet. Ebenso werden die Schaltgase zusammengeführt an der Unterseite 120 und können von dort den Geräteträger 10C verlassen. Es ist vorgesehen, dass das Abgasführungssystem, beispielsweise die Kanäle, den Abschaltdruck standhalten und an den Fugen wenig Schaltgas nach außen oder zum Nachbarpol gelangt um Phasenüberschläge oder Gehäuseüberschläge zu vermeiden.

Der Filterkasten 150 bewirkt, dass nach einem Kurzschluss des in dem Geräteträger 100 montierten elektrischen Schalters 1000 die Ruß- und Kontaktabbrand-Partikel aus dem entstehenden Schaltgas herausgefiltert werden und dadurch der Schaltschrank nicht verschmutzt wird und deshalb auch nicht gereinigt werden muss. Der Filterkasten 150 kann so ausgelegt sein, dass eine Reinigung der Schaltgase bis zu einem hohen Prozentsatz, beispielsweise >90%, möglich ist. Ebenso ist der Filterkasten 150 in einer sehr kompakten Bauform und lässt sich gut in den erfindungsgemäßen Geräteträger 100 integrieren.

Dadurch, dass der elektrische Schalter 1000 von der Vorderseite 110 des Geräteträgers 100 eingeführt wird ergibt sich, dass die Montage des Geräteträgers 100 und die Montage des elektrischen Schalters 1000 in den Geräteträger 100 örtlich und zeitlich voneinander unabhängig erfolgen können.

Durch die Integration von zwei elektrischen Schaltern 1000; 1001 in den erfindungsgemäßen Geräteträger 100 ist der Platzbedarf im Schaltschrank so optimiert, als ob ein Lastenschalter mit Sicherungen verwendet werden würde.

## Patentansprüche

1. Geräteträger (100) für mindestens einen elektrischen Schalter (1000), wobei der mindestens eine elektrische Schalter (1000) Auslässe von Schaltgasen an seiner Abgangsseite (1010) und an seiner Eingangsseite (1020) aufweist,
wobei die Schaltgase eines im Geräteträger (100) montierten elektrischen Schalters (1000) von der Abgangsseite (1010) und der Eingangsseite (1020) jeweils zur Unterseite (120) des Geräteträgers (100) geführt werden und von dort den Geräteträger (100) verlassen können
**dadurch gekennzeichnet, dass**
bei dem Geräteträger die Schaltgase der Abgangsseite (1010) und der Eingangsseite (1020) des mindestens einen elektrischen Schalters (1000) zuerst im Wesentlichen senkrecht in Richtung der Unterseite (120) des Geräteträgers (100) geführt werden und dann unterhalb des mindestens einen elektrischen Schalters (1000) aufeinander zugeführt werden.

2. Geräteträger (100) gemäß Anspruch 1, wobei der mindestens eine elektrische Schalter (1000) von der Vorderseite (110) des Geräteträgers (100) montierbar ist.

3. Geräteträger (100) gemäß Anspruch 1 oder 2, bei dem die Schaltgase der Abgangsseite (1010) an der Unterseite (120) des Geräteträgers (100) mit den Schaltgasen der Eingangsseite (1020) des mindestens einen elektrischen Schalters (1000) vor dem Verlassen zusammengeführt werden.

4. Geräteträger (100) gemäß Anspruch 1, 2 oder 3, bei dem die Führung der Schaltgase bei einem mehrpoligen elektrischen Schalter (1000) bis zur Unterseite (120) des Geräteträgers (100) getrennt nach den jeweiligen Polen erfolgt.

5. Geräteträger (100) gemäß einem der vorherigen Ansprüche, wobei an der Eingangsseite (1020) des elektrischen Schalters (1000) Stromschienen (1021; 1022; 1023) und an der Abgangsseite (1010) ebenfalls Stromschienen (1011; 1012; 1013) angeordnet sind und die Schaltgase um diese Stromschienen (1021; 1022; 1023, 1011; 1012; 1013) geführt werden.

6. Geräteträger (100) gemäß Anspruch 5, wobei an den Stromschienen (1021; 1022; 1023) an der Eingangsseite (1020) des elektrischen Schalters (1000) jeweils Klemmen (1031; 1032; 1033) zu Kontaktierung von Stromschienen (2010; 2020; 2030; 2040) einer Einspeisung (2000) angeordnet sind.

7. Geräteträger (100) gemäß einem der vorherigen Ansprüche, wobei der Geräteträger (100) an der Unterseite (120) einen Filterkasten (150) umfasst, durch den die Schaltgase den Geräteträger (100) verlassen.

8. Geräteträger (100) gemäß Anspruch 7, wobei der Filterkasten (150) eine Lochanordnung aufweist, der Filterkasten (150) mit einem Filtermedium (151) gefüllt ist oder der Filterkasten (150) ein Labyrinth aufweist.

9. Geräteträger (100) gemäß einem der vorherigen Ansprüche, bei dem die Schaltgase in Kanälen geführt werden.

10. Geräteträger (100) gemäß einem der vorherigen Ansprüche, bei dem dieser ein Gehäuse (180; 181) umfasst.

11. Geräteträger (100) gemäß einem der vorherigen Ansprüche, bei dem der mindestens eine elektrische Schalter (1000) von der Vorderseite (110) des Geräteträgers (100) montierbar ist.

12. Geräteträger (100) gemäß einem der vorherigen Ansprüche, bei dem der elektrische Schalter (1000) von der Vorderseite (110) in den Geräteträger (100) eingeführt wird und/oder Befestigungs- und Kontaktschrauben ebenfalls von der Vorderseite (110) zugänglich sind.

13. Geräteträger (100) gemäß einem der vorherigen Ansprüche, bei dem zwei elektrische Schalter (1000; 1001) von der Vorderseite (110) des Geräteträgers (100) montierbar sind.

14. Geräteträger (100) gemäß Anspruch 13, bei dem die zwei elektrischen Schalter (1000; 1001) hintereinander von der Vorderseite (110) des Geräteträgers (100) montierbar sind.

15. Geräteträger (100) gemäß einem der vorherigen Ansprüche, bei dem der mindestens eine elektrische Schalter (1000; 1001) ein Leistungsschalter, ein Lastschalter, ein Lasttrennschalter, ein Schütz oder ein Hybridschalter ist.

## Claims

1. Device support (100) for at least one electrical switch (1000), wherein the at least one electrical switch (1000) has outlets for switching gases on its output side (1010) and on its input side (1020),
wherein the switching gases of an electrical switch (1000) mounted in the device support (100) are in each case guided from the output side (1010) and the input side (1020) to the underside (120) of the device support (100) and may exit the device support (100) from there,
**characterized in that**, in the case of the device support, the switching gases from the output side (1010) and from the input side (1020) of the at least one electrical switch (1000) are first of all guided substantially perpendicularly in the direction of the underside (120) of the device support (100) and are then moved towards one another below the at least one electrical switch (1000).

2. Device support (100) according to Claim 1, wherein the at least one electrical switch (1000) is able to be mounted from the front side (110) of the device support (100).

3. Device support (100) according to Claim 1 or 2, in which the switching gases from the output side (1010) are combined with the switching gases from the input side (1020) of the at least one electrical switch (1000) on the underside (120) of the device support (100) prior to exiting.

4. Device support (100) according to Claim 1, 2 or 3, in which, in the case of a multi-pole electrical switch (1000), the switching gases are guided separately downstream of the respective poles as far as the underside (120) of the device support (100).

5. Device support (100) according to one of the preceding claims, wherein busbars (1021; 1022; 1023) are arranged at the input side (1020) of the electrical switch (1000) and busbars (1011; 1012; 1013) are also arranged at the output side (1010), and the switching gases are guided around these busbars (1021; 1022; 1023, 1011; 1012; 1013).

6. Device support (100) according to Claim 5, wherein terminals (1031; 1032; 1033) are in each case arranged on the busbars (1021; 1022; 1023) at the input side (1020) of the electrical switch (1000) for the purpose of contact-connecting busbars (2010; 2020; 2030; 2040) of an infeed (2000).

7. Device support (100) according to one of the preceding claims, wherein the device support (100), on the underside (120), comprises a filter box (150) through which the switching gases exit the device support (100).

8. Device support (100) according to Claim 7, wherein the filter box (150) has a hole arrangement, the filter box (150) is filled with a filter medium (151), or the filter box (150) has a labyrinth.

9. Device support (100) according to one of the preceding claims, in which the switching gases are guided in channels.

10. Device support (100) according to one of the preceding claims, in which said device support comprises a housing (180; 181).

11. Device support (100) according to one of the preceding claims, in which the at least one electrical switch (1000) is able to be mounted from the front side (110) of the device support (100).

12. Device support (100) according to one of the preceding claims, in which the electrical switch (1000) is inserted into the device support (100) from the front side (110) and/or fastening and contact screws are also accessible from the front side (110).

13. Device support (100) according to one of the preceding claims, in which two electrical switches (1000; 1001) are able to be mounted from the front side (110) of the device support (100).

14. Device support (100) according to Claim 13, in which the two electrical switches (1000; 1001) are able to be mounted one behind another from the front side (110) of the device support (100).

15. Device support (100) according to one of the preceding claims, in which the at least one electrical switch (1000; 1001) is a circuit breaker, a load interrupter switch, a switch disconnector, a contactor or a hybrid switch.

## Revendications

1. Support d'appareil (100) pour au moins un appareil de commutation électrique (1000), dans lequel ledit au moins un appareil de commutation électrique (1000) comprend des sorties de gaz de commutation sur son côté sortie (1010) et sur son côté entrée (1020), dans lequel les gaz de commutation d'un appareil de commutation électrique (1000) monté dans le support d'appareil (100) sont guidés depuis le côté sortie (1010) et le côté entrée (1020) respectivement vers le côté inférieur (120) du support d'appareil (100) et peuvent, de là, quitter le support d'appareil (100),
**caractérisé en ce que**
au niveau du support d'appareil, les gaz de commutation du côté sortie (1010) et du côté entrée (1020) de l'au moins un appareil de commutation électrique (1000) sont d'abord guidés pour l'essentiel à la verticale en direction du côté inférieur (120) du support d'appareil (100) et sont ensuite amenés l'un vers l'autre en dessous de l'au moins un appareil de commutation électrique (1000).

2. Support d'appareil (100) selon la revendication 1, dans lequel ledit au moins un appareil de commutation électrique (1000) peut être monté depuis le côté avant (110) du support d'appareil (100).

3. Support d'appareil (100) selon la revendication 1 ou la revendication 2, dans lequel les gaz de commutation du côté sortie (1010) sur le côté inférieur (120) du support d'appareil (100) sont réunis avec les gaz de commutation du côté entrée (1020) de l'au moins un appareil de commutation électrique (1000) avant leur sortie.

4. Support d'appareil (100) selon la revendication 1, la revendication 2 ou la revendication 3, dans lequel, dans le cas d'un appareil de commutation électrique (1000) multipolaire, l'acheminement des gaz de commutation jusqu'au côté inférieur (120) du support d'appareil (100) s'effectue séparément vers les pôles respectifs.

5. Support d'appareil (100) selon l'une des revendications précédentes, dans lequel des rails conducteurs (1021 ; 1022 ; 1023) sont disposés sur le côté entrée (1020) de l'appareil de commutation électrique (1000) et des rails conducteurs (1011 ; 1012 ; 1013) sont également disposés sur le côté sortie (1010) et les gaz de commutation sont guidés autour de ces rails conducteurs (1021 ; 1022 ; 1023, 1011 ; 1012 ; 1013).

6. Support d'appareil (100) selon la revendication 5, dans lequel des bornes (1031 ; 1032 ; 1033) sont disposées sur les rails conducteurs (1021 ; 1022 ; 1023) sur le côté entrée (1020) de l'appareil de commutation électrique (1000) pour la mise en contact de rails conducteurs (2010 ; 2020 ; 2030 ; 2040) d'une alimentation (2000).

7. Support d'appareil (100) selon l'une des revendications précédentes, dans lequel le support d'appareil (100) comprend sur le côté inférieur (120) un caisson de filtrage (150) à travers lequel les gaz de commutation s'échappent du support d'appareil (100).

8. Support d'appareil (100) selon la revendication 7, dans lequel le caisson de filtrage (150) présente un agencement de trous, le caisson de filtrage (150) est rempli d'un milieu filtrant (151) ou le caisson de filtrage (150) présente un labyrinthe.

9. Support d'appareil (100) selon l'une des revendications précédentes, dans lequel les gaz de commutation sont amenés dans des canaux.

10. Support d'appareil (100) selon l'une des revendications précédentes, dans lequel celui-ci comprend un boîtier (180 ; 181).

11. Support d'appareil (100) selon l'une des revendications précédentes, dans lequel l'au moins un appareil de commutation électrique (1000) peut être monté depuis le côté avant (110) du support d'appareil (100).

12. Support d'appareil (100) selon l'une des revendications précédentes, dans lequel l'appareil de commutation électrique (1000) est introduit dans le support d'appareil (100) par le côté avant (110) et/ou des vis de fixation et de contact sont également accessibles par le côté avant (110).

13. Support d'appareil (100) selon l'une des revendications précédentes, dans lequel deux appareils de commutation électriques (1000 ; 1001) peuvent être montés par le côté avant (110) du support d'appareil (100).

14. Support d'appareil (100) selon la revendication 13, dans lequel les deux appareils de commutation électriques (1000 ; 1001) peuvent être montés l'un derrière l'autre depuis le côté avant (110) du support d'appareil (100).

15. Support d'appareil (100) selon l'une des revendications précédentes, dans lequel l'au moins un appareil de commutation électrique (1000 ; 1001) est un disjoncteur, un interrupteur, un interrupteur-sectionneur, un contacteur ou un appareil de commutation hybride.
